# EUROPEAN PATENT APPLICATION

(11) **EP 4 072 237 A1**
(43) Date of publication of application: **12.10.2022**
(21) Application number: 20897446.9
(22) Date of filing: 23.11.2020
(51) Int. Cl.: H04W 76/15

(54) **DUAL-CONNECTIVITY ANCHOR POINT ACCESS METHOD, APPARATUS AND DEVICE, AND STORAGE MEDIUM**

(30) Priority: 02.12.2019 CN 201911212692
(71) Applicant: ZTE Corporation, Shenzhen, Guangdong 518057 (CN)
(72) Inventor: WANG, Juntao, Shenzhen, Guangdong 518057 (CN); XIN, Shengli, Shenzhen, Guangdong 518057 (CN); YAN, Pengzhou, Shenzhen, Guangdong 518057 (CN); SUN, Zhiyuan, Shenzhen, Guangdong 518057 (CN)
(74) Representative: Tiburzi, Andrea
(86) International application number: PCT/CN2020/130781
(87) International publication number: WO 2021/109886

(57) **Abstract**

Provided are a dual-connectivity anchor access method and apparatus, a device, and a storage medium. The dual-connectivity anchor access method includes: receiving a dual-connectivity anchor frequency indication, selecting one frequency indicated by the dual-connectivity anchor frequency indication as an access frequency, and accessing a network at the selected access frequency. The dual-connectivity anchor access method further includes: broadcasting a dual-connectivity anchor frequency indication, receiving an access request from a user equipment, UE, at one frequency indicated by the dual-connectivity anchor frequency indication, and sending an access response to the UE, so that the UE accesses a network.

## Description

This application claims priority to Chinese Patent Application No. 201911212692.5 filed with the China National Intellectual Property Administration (CNIPA) on Dec. 2, 2019, the disclosure of which is incorporated herein by reference in its entirety.

### TECHNICAL FIELD

The present application relates to wireless communication networks, for example, a dual-connectivity anchor access method and apparatus, a device, and a storage medium.

### BACKGROUND

R15 of the fifth-generation mobile communication (5G) introduces multi-radio dual connectivity (MR-DC) dual-connectivity networking. The dual-connectivity networking technology makes full use of radio air interface resources of access points of the same or different formats, thereby improving the rate. Macro/micro networking is used to improve spectrum efficiency and load balancing, terminals supporting dual connectivity can simultaneously connect two Long Term Evolution (LTE)/New Radio (NR) base stations, and meanwhile, dual connectivity between an NR and an NR is allowed to be established, thereby increasing the throughput of a single user.

Operators configure multiple carrier frequencies in a network. A master node (MN) configures one continuous carrier or provides a dual-connectivity service for user equipment (UE) having an MR-DC capability in several continuous coverage carrier frequencies. In the multi-carrier frequency network, the capability of terminals is not distinguished in the access stage, a UE preferentially reselects a high-priority frequency cell to access according to the broadcast reselection priority, and then a network side adjusts the residence of terminals having different capabilities according to the radio resource management (RRM) strategy. However, this process will lead to the migration of UEs having different capabilities in the access process, affecting the experience in the access and mobile processes of UEs.

### SUMMARY

For the problem that the migration of UEs having different capabilities in the access process affects the experience in the access and mobile processes of UEs, the present application provides a dual-connectivity anchor access method and apparatus, a device, and a storage medium.

The embodiments of the present application provide a dual-connectivity anchor access method. The method includes the following steps: a dual-connectivity anchor frequency indication is received; one frequency indicated by the dual-connectivity anchor frequency indication is selected as an access frequency; and a network is accessed at the selected access frequency.

The embodiments of the present application provide a dual-connectivity anchor access method. The method includes the following steps: a dual-connectivity anchor frequency indication is broadcasted; an access request is received from a UE at one frequency indicated by the dual-connectivity anchor frequency indication; and an access response is sent to the UE so that the UE accesses a network.

The embodiments of the present application provide a dual-connectivity anchor access apparatus. The apparatus includes: a receiving module configured to receive a dual-connectivity anchor frequency indication; a selection module configured to select one frequency indicated by the dual-connectivity anchor frequency indication as an access frequency; and an access module configured to access a network at the selected access frequency.

The embodiments of the present application provide a dual-connectivity anchor access apparatus. The apparatus includes: a broadcasting module configured to broadcast a dual-connectivity anchor frequency indication; a receiving module configured to receive an access request from a UE at one frequency indicated by the dual-connectivity anchor frequency indication; and a sending module configured to send an access response to the UE so that the UE accesses a network.

The embodiments of the present application provide a UE. The UE includes a processor and a memory, where the processor is configured to execute program instructions stored in the memory to perform the dual-connectivity anchor access method described above.

The embodiments of the present application provide an access point. The access point includes a processor and a memory, where the processor is configured to execute program instructions stored in the memory to perform the dual-connectivity anchor access method described above.

The embodiments of the present application provide a computer-readable storage medium storing a computer program, where the computer program, when executed by a processor, performs the dual-connectivity anchor access method described above.

### BRIEF DESCRIPTION OF DRAWINGS

FIG. 1 is a flowchart of a dual-connectivity anchor access method according to an embodiment;
FIG. 2 is a flowchart of another dual-connectivity anchor access method according to an embodiment;
FIG. 3 is a flowchart of another dual-connectivity anchor access method according to an embodiment;
FIG. 4 is a flowchart of another dual-connectivity anchor access method according to an embodiment;
FIG. 5 is a flowchart of the interaction of a dual-connectivity anchor access method according to an embodiment;
FIG. 6 is a schematic diagram of a network connection of the access performed according to the dual-connectivity anchor access method shown in FIG. 5;
FIG. 7 is a flowchart of the interaction of another dual-connectivity anchor access method according to an embodiment;
FIG. 8 is a schematic diagram of a network connection of the access performed according to the dual-connectivity anchor access method shown in FIG. 7;
FIG. 9 is a flowchart of the interaction of another dual-connectivity anchor access method according to an embodiment;
FIG. 10 is a schematic diagram of a network connection of the access performed according to the dual-connectivity anchor access method shown in FIG. 9;
FIG. 11 is a structural schematic diagram of a dual-connectivity anchor access apparatus according to an embodiment;
FIG. 12 is a structural schematic diagram of another dual-connectivity anchor access apparatus according to an embodiment;
FIG. 13 is a structural schematic diagram of a UE according to an embodiment; and
FIG. 14 is a structural schematic diagram of an access point according to an embodiment.

### DETAILED DESCRIPTION

Embodiments of the present application are described hereinafter in conjunction with drawings.

The carrier frequency of an MN supporting the establishment of dual connectivity is called the anchor carrier frequency. Taking an evolved universal terrestrial radio access network (EUTRAN) NR-dual connectivity (EN-DC) of a universal mobile telecommunications system (UMTS) as an example, the LTE anchor carrier frequency is the LTE carrier frequency that can establish EN-DC dual connectivity with a UE. Since the broadcast frequency priority strategy is for all UEs, the resident strategies of terminals having an MR-DC dual-connectivity capability or terminals having a common UE capability are consistent. The network RRM strategy requires the process of migrating a common UE to a non-anchor carrier frequency or migrating a UE having the dual-connectivity capability to an anchor carrier frequency, and especially, voice over Long-Term Evolution (VOLTE) services are subjected to the frequent migration and are greatly impacted. Meanwhile, the interoperation strategy is extremely complex in the network sharing of master nodes and secondary nodes in the dual-connectivity process.

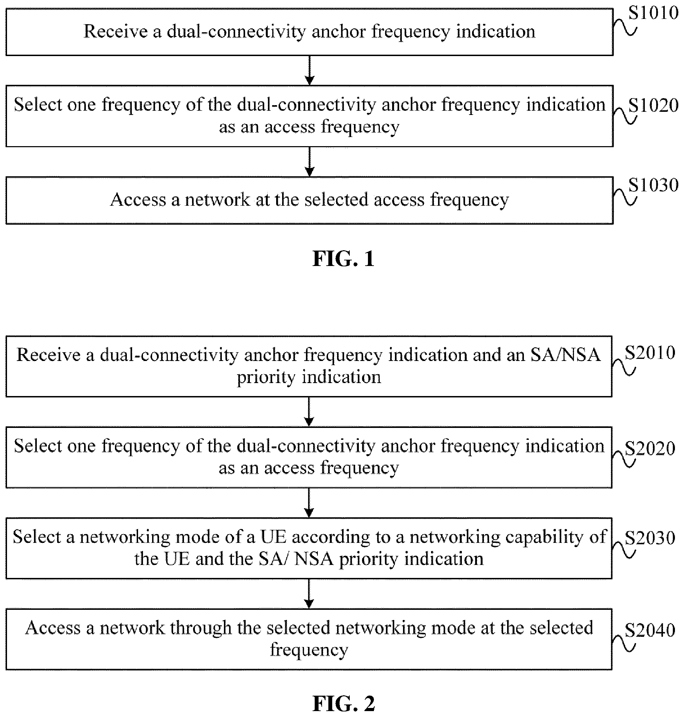

FIG. 1 is a flowchart of a dual-connectivity anchor access method according to an embodiment. As shown in FIG. 1, the method provided by this embodiment includes the steps described below.

In step S 1010, a dual-connectivity anchor frequency indication is received.

The dual-connectivity anchor access method provided by this embodiment is applied to a terminal in a mobile communication network, and the terminal may also be called the UE. The UE in this embodiment of the present application is a UE that supports dual connectivity. When the mobile communication network has a UE that supports dual connectivity and a terminal that supports dual connectivity also exists in the network, the UE of any kind first selects an access frequency according to a frequency priority broadcasted by the network, the UE that supports dual connectivity is migrated to an anchor carrier frequency according to an RRM strategy, and a UE that does not support dual connectivity is migrated to a non-anchor carrier frequency. However, the process described above leads to the frequent migration of services, affecting the use of users.

In this manner, in this embodiment of the present application, an MN in a network that supports dual connectivity broadcasts a dual-connectivity anchor carrier frequency indication, and a UE that is located within the coverage range of the MN receives a dual-connectivity anchor frequency indication. The dual-connectivity anchor frequency indication is used for indicating an anchor carrier frequency that is specially used for dual connectivity. The dual-connectivity anchor frequency indication may include a frequency of at least one anchor carrier frequency. The frequency indicated by the dual-connectivity anchor frequency indication may be the absolute radio frequency channel number (ARFCN) of at least one frequency, including evolved-ARFCN (E-ARFCN) of the LTE and NR-ARFCN of the NR.

In step S 1020, one frequency indicated by the dual-connectivity anchor frequency indication is selected as an access frequency.

When the UE receives the dual-connectivity anchor frequency indication, if the UE supports dual connectivity, the UE selects one frequency indicted by the dual-connectivity anchor frequency indication as the access frequency with the highest priority and no longer selects the access frequency according to the frequency priority broadcasted by the network. Since the frequencies indicated by the dual-connectivity anchor frequency indication are all frequencies that support dual connectivity, when the UE selects one frequency indicated by the dual-connectivity anchor frequency indication as the access frequency, the UE that supports dual connectivity may directly access the network at the anchor carrier frequency, thereby avoiding the process that the UE first accesses the network according to a common frequency priority and then is migrated to the anchor carrier frequency and improving the network access efficiency of the UE and the use experience of users.

The dual-connectivity anchor frequency indication broadcasted by the network may include one or more frequencies, and multiple frequencies may have the same priority or have different priorities. If multiple frequencies have different priorities, the UE may select one frequency with the highest priority indicated by the dual-connectivity anchor frequency indication as the access frequency after the UE receives the dual-connectivity anchor frequency indication. If multiple frequencies have the same priority or multiple frequencies with the highest priority are provided, the UE may select one frequency according to a preset rule.

In step S1030, a network is accessed at the selected access frequency.

After the UE selects one frequency indicated by the dual-connectivity anchor frequency indication as the access frequency, the UE may access the network at the selected access frequency. The process where the UE accesses the network may include the following steps. The UE sends a radio resource control (RRC) connection establishment request to an MN, receives an RRC connection establishment response from the MN, then establishes an RRC connection with the MN at the selected access frequency, and sends an RRC connection establishment completion response to the MN. The MN sends a secondary node addition request to a secondary node (SN) and then receives a secondary node addition response from the SN. The MN sends an RRC connection reconfiguration message to the UE, and the UE acquires the information of the added SN, establishes a connection with the SN, and sends an RRC connection reconfiguration completion response to the MN. In this manner, the UE completes the access at the anchor carrier frequency. The UE can directly access the network at the anchor carrier frequency after receiving the dual-connectivity anchor frequency indication, thereby avoiding the process of frequency migration.

In an embodiment, the step where the UE receives the dual-connectivity anchor frequency indication further includes the following step: the UE receives a public land mobile network (PLMN)-level dual-connectivity anchor frequency indication, where the PLMN-level dual-connectivity anchor frequency indication includes dual-connectivity anchor frequency indications of different PLMNs. The mobile communication network is built by various different operators, that is, the network shares multiple PLMNs. The PLMNs of the network built by different operators are different, the operators to which UEs belong are also different, and the operators expect the UEs to access the frequencies provided by their own devices to facilitate charging and management. In this manner, the network may broadcast the PLMN-level dual-connectivity anchor frequency indication, that is, the networks of different PLMNs broadcast the dual-connectivity anchor frequency indication, respectively. After receiving the PLMN-level dual-connectivity anchor frequency indication, the UE preferentially selects a frequency, which is the same as its own PLMN, indicated by the dual-connectivity anchor frequency indication, that is, the UE preferentially selects one frequency indicated by the dual-connectivity anchor frequency indication of the home PLMN of the UE as the access frequency. For example, PLMN-1 and PLMN-2 belong to different operators, PLMN-1 belongs to Operator 1, and PLMN-2 belongs to Operator 2. The PLMN-1 operator broadcasts a home dual-connectivity anchor frequency indication, and the UE of PLMN-1 performs processing according to a home dual-connectivity anchor frequency strategy of PLMN-1. The PLMN-2 operator broadcasts a home anchor frequency indication, and the UE of PLMN-2 performs processing according to a home dual-connectivity anchor frequency strategy of PLMN-2. The home dual-connectivity anchor frequencies of PLMN-1 and PLMN-2 may be the same or different.

In the dual-connectivity anchor access method provided by this embodiment, after the dual-connectivity anchor frequency indication is received, one frequency indicated by the dual-connectivity anchor frequency indication is selected as the access frequency, and the UE accesses the network at the selected access frequency so that the UE that supports dual connectivity can directly access the anchor carrier frequency, thereby avoiding the process where the UE accesses the network and then is subjected to frequency migration and improving the use experience of users.

In the embodiment shown in FIG. 1, if the UE is a UE that supports dual connectivity, after the UE receives the dual-connectivity anchor frequency indication, the UE selects one frequency indicated by the dual-connectivity anchor frequency indication as the access frequency. The dual-connectivity anchor frequency indication is broadcast information. If the UE is a UE that does not support dual connectivity, the UE still receives the dual-connectivity anchor frequency indication, and at this point, the UE ignores the dual-connectivity anchor frequency indication.

FIG. 2 is a flowchart of another dual-connectivity anchor access method according to an embodiment. As shown in FIG. 2, the method provided by this embodiment includes the steps described below.

In step S2010, a dual-connectivity anchor frequency indication and a standalone (SA)/non-standalone (NSA) priority indication are received.

The 5G network is networked in two networking manners: SA and NSA, and UEs in the 5G network also include UEs that only support NSA, UEs that only support SA and dual-mode UEs that support both NSA and SA. Since NSA and SA have different manners of passing through the anchor carrier frequency, the network may also broadcast the SA/NSA priority indication while the network broadcasts the dual-connectivity anchor frequency indication. The SA/NSA priority indication is used for indicating that the UE accesses the network preferentially using the SA manner or NSA manner.

In step S2020, one frequency indicated by the dual-connectivity anchor frequency indication is selected as an access frequency.

After the UE receives the dual-connectivity anchor frequency indication, the UE selects one frequency indicated by the dual-connectivity anchor frequency indication as an access frequency, and this step is the same as step S 1020.

In step S2030, a networking mode of a UE is selected according to a networking capability of the UE and the SA/NSA priority indication.

After the UE receives the SA/NSA priority indication, the UE determines and selects the networking mode of the UE according to the networking capability of the UE and the SA/NSA priority indication. If the UE only supports SA, even if the SA/NSA priority indication indicates that NSA is prioritized, the UE cannot perform networking according to the NSA mode, and then the UE performs networking according to the SA mode; when the SA/NSA priority indication indicates that SA is prioritized, the UE performs networking according to the SA mode. If the UE only supports NSA, even if the SA/NSA priority indication indicates that SA is prioritized, the UE cannot perform networking according to the SA mode, and then the UE performs networking according to the NSA mode; when the SA/NSA priority indication indicates that NSA is prioritized, the UE performs networking according to the NSA mode. If the UE is a UE that supports both SA and NSA, if the SA/NSA priority indication indicates that NSA is prioritized, the UE performs networking according to the NSA mode; if the SA/NSA priority indication indicates that SA is prioritized, the UE performs networking according to the SA mode. For an NSA and SA dual-mode networking terminal, the network broadcasts an indication which indicates an access manner, and the terminal may still access the network by switching to a suitable capability manner according to the scenario.

In step S2040, the network is accessed through the selected networking mode at the selected access frequency.

After the UE selects the access frequency and the networking mode, the UE may access the network through the selected networking mode at the access frequency. In a case where the UE performs networking according to the NSA mode, the UE only needs to interact with the MN to complete the access process, as shown in step S1030. In a case where the UE performs networking according to the SA mode, the UE interacts with both the MN and the SN to complete the networking process.

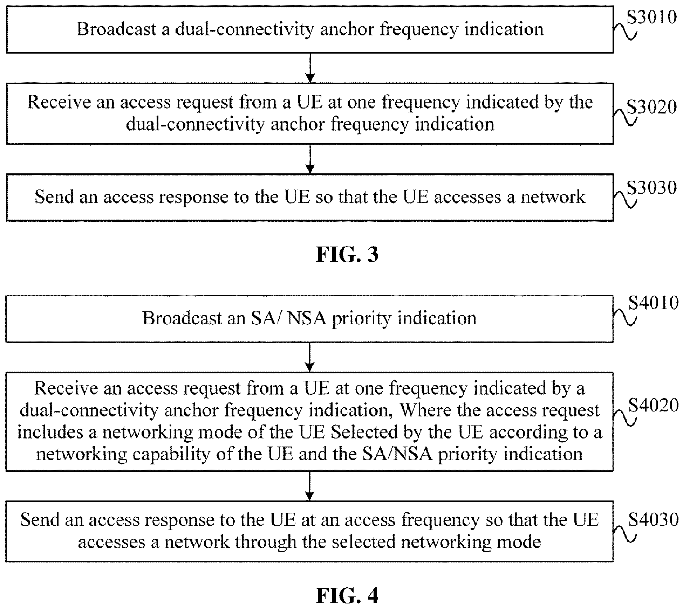

FIG. 3 is a flowchart of another dual-connectivity anchor access method according to an embodiment. As shown in FIG. 3, the method provided by this embodiment includes the steps described below.

In step S3010, a dual-connectivity anchor frequency indication is broadcasted.

The dual-connectivity anchor access method provided by this embodiment is applied to an access point in a mobile communication network, such as a base station or an access point in other forms. The UE in this embodiment of the present application is an access point that supports dual connectivity. Since the MN sends control information in the network, the MN broadcasts the dual-connectivity anchor frequency indication. When the mobile communication network supports a UE that supports dual connectivity and a UE that supports dual connectivity also exists in the network, the UE of any kind first selects an access frequency according to a frequency priority broadcasted by the network, the UE that supports dual connectivity is migrated to an anchor carrier frequency according to an RRM strategy, and a UE that does not support dual connectivity is migrated to a non-anchor carrier frequency. However, the process described above leads to the frequent migration of services, affecting the use of UE.

In this manner, in this embodiment of the present application, an MN in a network that supports dual connectivity broadcasts a dual-connectivity anchor carrier frequency indication, and a UE that is located within the coverage range of the MN receives a dual-connectivity anchor frequency indication. The dual-connectivity anchor frequency indication is used for indicating an anchor carrier frequency that is specially used for dual connectivity. The dual-connectivity anchor frequency indication may include frequency of at least one anchor carrier frequency. The frequencies indicated by the dual-connectivity anchor frequency indication may be the absolute radio frequency channel number (ARFCN) of at least one frequency.

In an embodiment, the MN broadcasts at least two dual-connectivity anchor frequency indications and priorities of the at least two dual-connectivity anchor frequency indications.

In an embodiment, the MN broadcasts the dual-connectivity anchor frequency indication at all frequency layers, and since the terminal performs selection according to the signal quality in the process of cell selection to access and there is no priority indication, the terminal may reside at all frequency layers. All frequency layers broadcast and indicate the anchor frequency layer, thereby improving the anchor selection probability of the terminal.

In step S3020, an access request is received from a UE at one frequency indicated by the dual-connectivity anchor frequency indication.

When the UE receives the dual-connectivity anchor frequency indication, if the UE supports dual connectivity, the UE selects one frequency indicated by the dual-connectivity anchor frequency indication as the access frequency and no longer selects an access frequency according to the frequency priority broadcasted by the network. Since the frequencies indicated by the dual-connectivity anchor frequency indication are all frequencies that support dual connectivity, when the UE selects one frequency indicated by the dual-connectivity anchor frequency indication as the access frequency, the UE that supports dual connectivity may directly access the network at the anchor carrier frequency, avoiding the process that the UE first accesses the network according to a common frequency priority and then is migrated to the anchor carrier frequency, thereby improving the network access efficiency of the UE and the use experience of users. The MN receives the access request from the UE at the one frequency indicated by the dual-connectivity anchor frequency indication.

The dual-connectivity anchor frequency indication broadcasted by the network may include one or more frequencies, and multiple frequencies may have the same priority or have different priorities. If multiple frequencies have different priorities, the UE may select one frequency with the highest priority indicated by the dual-connectivity anchor frequency indication as the access frequency after the UE receives the dual-connectivity anchor frequency indication. That is, in a non-network sharing scenario, multiple dual-connectivity anchor frequency indications and priorities of the multiple dual-connectivity anchor frequency indications are broadcasted. If multiple frequencies indicated by the dual-connectivity anchor frequency indication have the same priority or multiple frequencies with the highest priority are provided, the UE may select one frequency according to a preset rule.

In step S3030, an access response is sent to the UE so that the UE accesses a network.

After the MN receives the access request from the UE, the MN sends the access response to the UE so that the UE accesses the network. The process where the UE accesses the network may include the steps below.

The UE sends an RRC connection establishment request to the MN, receives an RRC connection establishment response from the MN, then establishes an RRC connection with the MN at the selected access frequency, and sends an RRC connection establishment completion response to the MN. The MN sends a secondary node addition request to an SN and then receives a secondary node addition response from the SN. The MN sends an RRC connection reconfiguration message to the UE, and the UE acquires the information of the added SN, establishes a connection with the SN, and sends an RRC connection reconfiguration completion response to the MN. In this manner, the UE completes the access at the anchor carrier frequency. The UE can directly access the network at the anchor carrier frequency after receiving the dual-connectivity anchor frequency indication, thereby avoiding the process of frequency migration.

In an embodiment, the step where the dual-connectivity anchor frequency indication is broadcasted may further include the steps below.

A PLMN-level dual-connectivity anchor frequency indication is broadcasted, where the PLMN-level dual-connectivity anchor frequency indication includes dual-connectivity anchor frequency indications of different PLMNs. The mobile communication network is built by various different operators, the PLMNs of the network built by different operators are different, the operators to which UEs belong are also different, and the operators expect the UEs to access the frequencies provided by their own devices to facilitate charging and management. In this manner, the network may broadcast the PLMN-level dual-connectivity anchor frequency indication, that is, the networks of different PLMNs broadcast the dual-connectivity anchor frequency indication, respectively. That is, in a scenario where a network shares multiple PLMNs, multiple dual-connectivity anchor frequency indications and priorities of the multiple dual-connectivity anchor frequency indications are broadcasted. After the UE receives the PLMN-level dual-connectivity anchor frequency indication, the UE preferentially selects a frequency indicated by the dual-connectivity anchor frequency indication which is the same as its own PLMN, that is, the UE preferentially selects one frequency indicated by the dual-connectivity anchor frequency indication of the home PLMN of the UE as the access frequency. For example, PLMN-1 and PLMN-2 belong to different operators, PLMN-1 belongs to Operator 1, and PLMN-2 belongs to Operator 2. The PLMN-1 operator broadcasts a home dual-connectivity anchor frequency indication, and the user of PLMN-1 performs processing according to a home dual-connectivity anchor frequency strategy of PLMN-1. The PLMN-2 operator broadcasts a home anchor frequency indication, and the user of PLMN-2 performs processing according to a home dual-connectivity anchor frequency strategy of PLMN-2. The home dual-connectivity anchor frequencies of PLMN-1 and PLMN-2 may be the same or different.

In the dual-connectivity anchor access method provided by this embodiment, the dual-connectivity anchor frequency indication is broadcasted, the access request is received from the UE at one frequency indicated by the dual-connectivity anchor frequency indication, the access response is sent to the UE, and the UE accesses the network so that the UE that supports dual connectivity can directly access the anchor carrier frequency, thereby avoiding the process where the UE accesses the network and then is subjected to frequency migration and improving the use experience of users.

FIG. 4 is a flowchart of another dual-connectivity anchor access method according to an embodiment. As shown in FIG. 4, the method provided by this embodiment includes the steps described below.

In step S4010, an SA/NSA priority indication is broadcasted.

The 5G network is networked in two networking manners: SA and NSA, and UEs in the 5G network also include UEs that only support NSA, UEs that only support SA and dual-mode UEs that support both NSA and SA. Since NSA and SA have different manners of passing through the anchor carrier frequency, the network may also broadcast the SA/NSA priority indication while the network broadcasts the dual-connectivity anchor frequency indication. The SA/NSA priority indication is used for indicating that the UE accesses the network preferentially using the SA manner or NSA manner.

In step S4020, the access request is received from the UE at the one frequency indicated by the dual-connectivity anchor frequency indication, where the access request includes a networking mode of the UE selected by the UE according to a networking capability of the UE and the SA/NSA priority indication.

After the UE receives the dual-connectivity anchor frequency indication, the UE selects one frequency indicated by the dual-connectivity anchor frequency indication as an access frequency. After the UE receives the SA/NSA priority indication, the UE needs to determine and select the networking mode of the UE according to the networking capability of the UE and the SA/NSA priority indication. If the UE only supports SA, even if the SA/NSA priority indication indicates that NSA is prioritized, the UE cannot perform networking according to the NSA mode, and then the UE performs networking according to the SA mode; when the SA/NSA priority indication indicates that SA is prioritized, the UE performs networking according to the SA mode. If the UE only supports NSA, even if the SA/NSA priority indication indicates that SA is prioritized, the UE cannot perform networking according to the SA mode, and then the UE performs networking according to the NSA mode; when the SA/NSA priority indication indicates that NSA is prioritized, the UE performs networking according to the NSA mode. If the UE is a UE that supports both SA and NAS, and the SA/NSA priority indication indicates that NSA is prioritized, the UE performs networking according to the NSA mode; if the SA/NSA priority indication indicates that SA is prioritized, the UE performs networking according to the SA mode.

The MN receives the access request from the UE at the one frequency indicated by the dual-connectivity anchor frequency indication, where the access request includes the networking mode of the UE selected by the UE according to a networking capability of the UE and the SA/NSA priority indication.

In step S4030, the access response is sent to the UE at an access frequency so that the UE accesses the network through the selected networking mode.

After the UE selects the access frequency and the networking mode, the UE may access the network through the selected networking mode at the access frequency. In a case where the UE performs networking according to the NSA mode, the UE only needs to interact with the MN to complete the access process, as shown in step S3030. In a case where the UE performs networking according to the SA mode, the UE interacts with both the MN and the SN to complete the networking process.

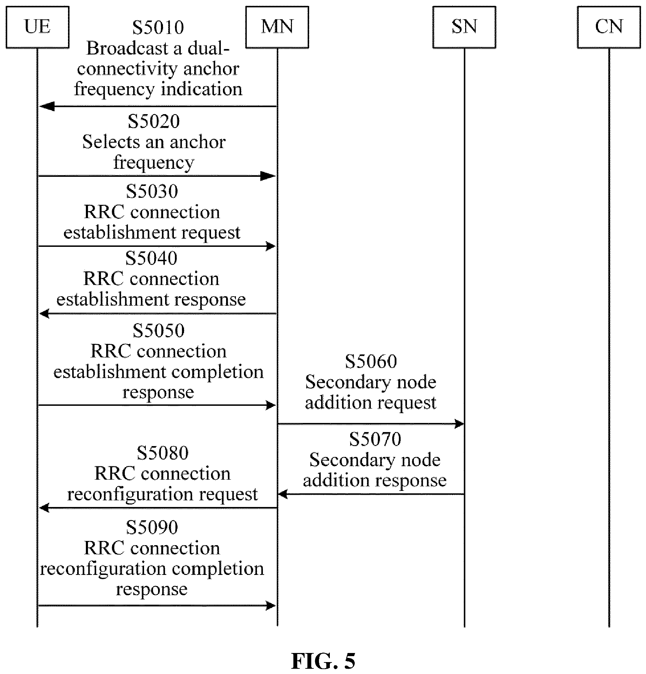

FIG. 5 is a flowchart of the interaction of a dual-connectivity anchor access method according to an embodiment. As shown in FIG. 5, the method provided in this embodiment includes the steps described below.

In step S5010, the MN broadcasts a dual-connectivity anchor frequency indication.

In step S5020, the UE selects an anchor frequency.

In step 5030, the MN sends an RRC connection establishment request.

In step 5040, the MN sends an RRC connection establishment response.

In step 5050, the UE sends an RRC connection establishment completion response.

In step S5060, the MN sends a secondary node addition request to the SN.

In step S5070, the SN sends a secondary node addition response to the MN.

In step 5080, the MN sends an RRC connection reconfiguration request to the UE.

In step 5090, the UE sends an RRC connection reconfiguration completion response to the MN.

In the dual-connectivity anchor access method provided by this embodiment, the UE is a UE that supports dual connectivity and the UE is a UE having the NSA capability. The UE re-selects an anchor frequency layer cell according to a network side anchor frequency layer indication to directly perform traffic and enjoys the dual-connectivity service as soon as possible. Assuming that the priority of a non-anchor frequency layer is low in the priority broadcasted by the system, a common terminal (non-dual-connectivity terminal) resides in the non-anchor frequency layer according to the broadcasted priority, thereby avoiding the repeated migration of the non-dual-connectivity terminal between the anchor frequency layer and the non-anchor frequency layer and reducing the influence of traffic interruption. The CN in the figure represents the core network.

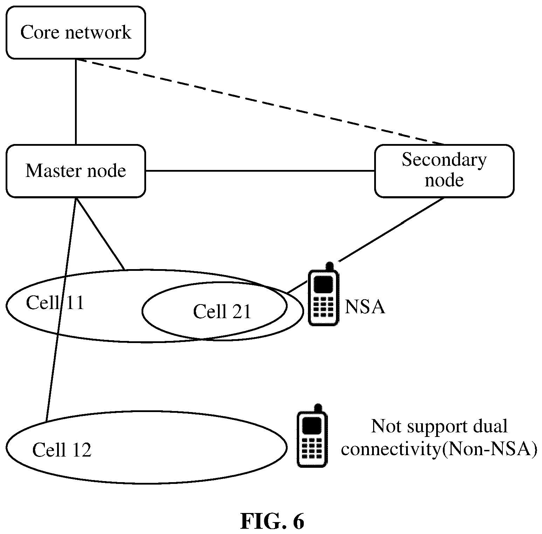

FIG. 6 is a schematic diagram of a network connection of the access performed according to the dual-connectivity anchor access method shown in FIG. 5. In the figure, the cell 11 is an anchor frequency, and Non-NSA UE represents a UE that does not support dual connectivity.

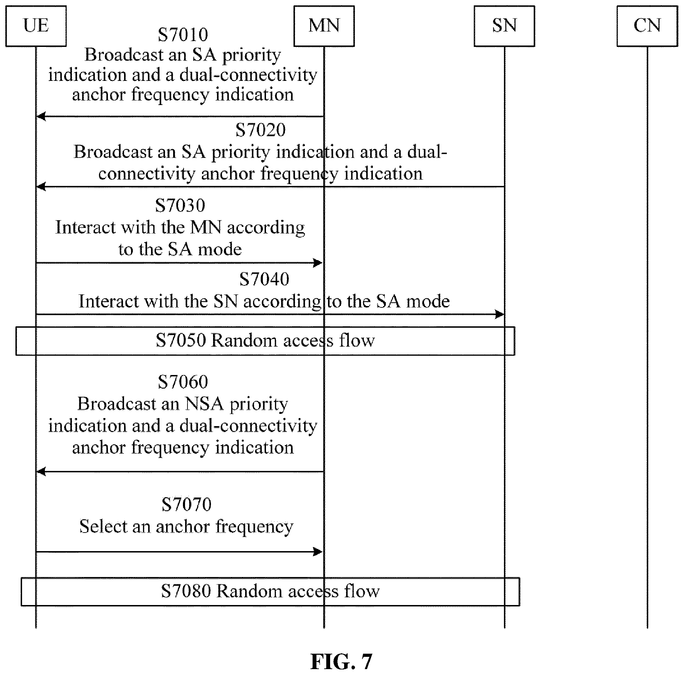

FIG. 7 is a flowchart of the interaction of another dual-connectivity anchor access method according to an embodiment. As shown in FIG. 7, the method provided by this embodiment includes the steps described below.

In step S7010, the MN broadcasts an SA priority indication and a dual-connectivity anchor frequency indication.

In step S7020, the SN broadcasts an SA priority indication and a dual-connectivity anchor frequency indication.

In step S7030, the UE that supports SA interacts with the MN according to the SA mode.

In step S7040, the UE that supports SA interacts with the SN according to the SA mode.

Step S7030 and step S7040 may be either selected, and the UE may access the network in the MN or the SN.

In step S7050, the random access flow is performed, and this step is the same as steps S5030 to S5090.

Steps S7010 to S7050 are a flowchart of the access of the UE that supports SA to the network according to the SA mode.

In step S7060, the MN broadcasts an NSA priority indication and a dual-connectivity anchor frequency indication.

In step S7070, the UE selects an anchor frequency.

In step S7080, the random access flow is performed, and this step is the same as steps S5030 to S5090.

Steps S7060 to S7080 are a flowchart of the access of the UE that supports NSA to the network according to the NSA mode.

When the network indicates that SA is prioritized, the dual-mode terminal makes residence selection according to the SA capability. If the network indicates that NSA is prioritized, the dual-mode terminal makes residence selection according to the NSA capability. Other terminals execute residence selection according to the original residence strategy.

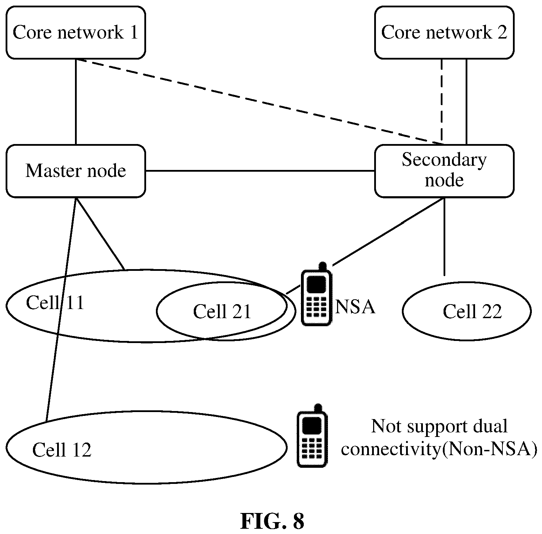

FIG. 8 is a schematic diagram of a network connection of the access performed according to the dual-connectivity anchor access method shown in FIG. 7. In the figure, the cell 11 is an anchor frequency, and Non-NSA UE represents a UE that does not support dual connectivity.

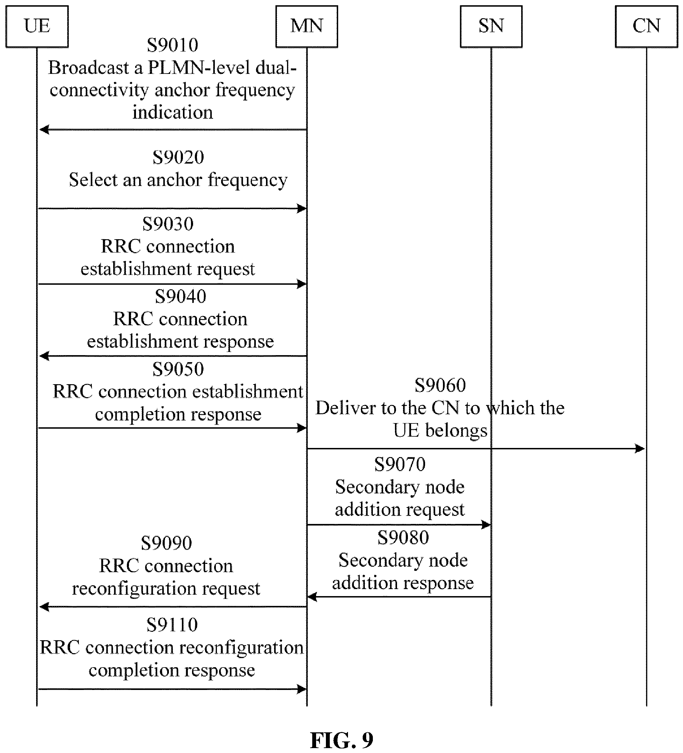

FIG. 9 is a flowchart of the interaction of another dual-connectivity anchor access method according to an embodiment. As shown in FIG. 9, the method provided by this embodiment includes the step described below.

In step S9010, the MN broadcasts a PLMN-level dual-connectivity anchor frequency indication.

In step S9020, the UE selects an anchor frequency.

In step S9030, the UE sends an RRC connection establishment request.

In step S9040, the MN sends an RRC connection establishment response.

In step S9050, the UE sends an RRC connection establishment completion response.

In step S9060, the MN delivers selection information of the anchor frequency to the CN to which the UE belongs.

In step S9070, the MN sends a secondary node addition request to the SN.

In step S9080, the SN sends a secondary node addition response to the MN.

In step S9090, the MN sends an RRC connection reconfiguration request to the UE.

In step S9100, the UE sends an RRC connection reconfiguration completion response to the MN.

The UE having the dual-connectivity capability re-selects a home PLMN anchor frequency layer cell according to a network side PLMN-level anchor frequency layer indication to directly perform traffic and enjoys the dual-connectivity service as soon as possible. Assuming that the priority of a non-anchor frequency layer is low in the priority broadcasted by the system, a common terminal (non-dual-connectivity terminal) resides in the non-anchor frequency layer according to the broadcasted priority, thereby avoiding the repeated migration of the non-dual-connectivity terminal between the anchor frequency layer and the non-anchor frequency layer and reducing the influence of traffic interruption.

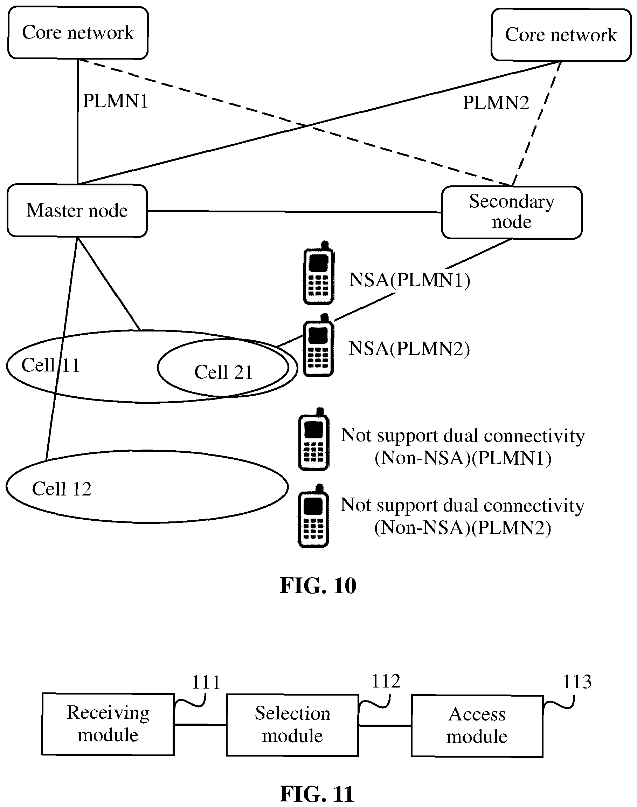

FIG. 10 is a schematic diagram of a network connection of the access performed according to the dual-connectivity anchor access method shown in FIG. 9. In the figure, the cell 11 is an anchor frequency, and Non-NSA UE represents a UE that does not support dual connectivity.

FIG. 11 is a structural schematic diagram of a dual-connectivity anchor access apparatus according to an embodiment. As shown in FIG. 11, the dual-connectivity anchor access apparatus provided by this embodiment includes a receiving module 111, a selection module 112, and an access module 113.

The receiving module 111 is configured to receive a dual-connectivity anchor frequency indication. The selection module 112 is configured to select one frequency indicated by the dual-connectivity anchor frequency indication as an access frequency. The access module 113 is configured to access a network at the selected access frequency.

The dual-connectivity anchor access apparatus provided by this embodiment is configured to implement the dual-connectivity anchor access method of the embodiment shown in FIG. 1. The implementation principle and technical effects of the dual-connectivity anchor access apparatus provided by this embodiment are similar to those of the dual-connectivity anchor access method, and details will not be repeated herein.

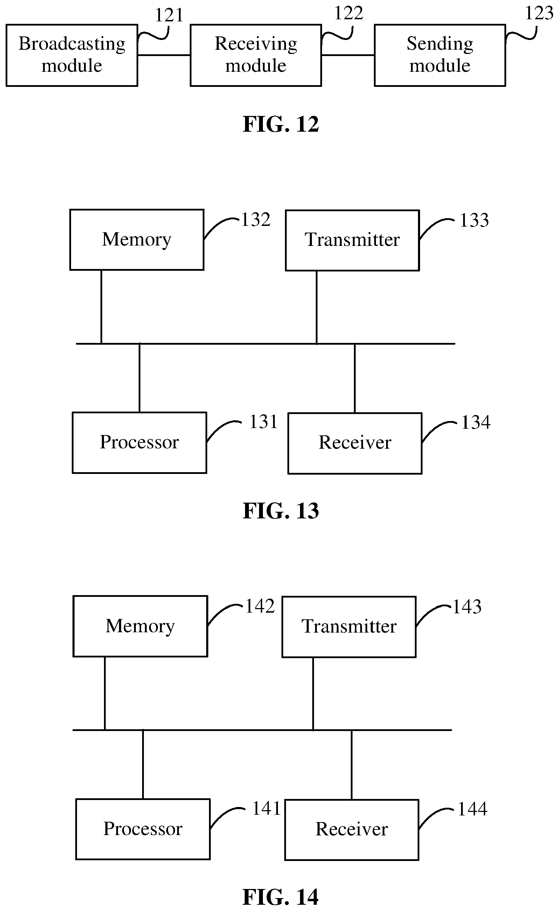

FIG. 12 is a structural schematic diagram of another dual-connectivity anchor access apparatus according to an embodiment. As shown in FIG. 12, the dual-connectivity anchor access apparatus provided by this embodiment includes a broadcasting module 122, a receiving module 123, and a sending module 123.

The broadcasting module 121 is configured to broadcast a dual-connectivity anchor frequency indication. The receiving module 122 is configured to receive an access request from a UE at one frequency indicated by the dual-connectivity anchor frequency indication. The sending module 123 is configured to send an access response to the UE so that the UE accesses a network.

The dual-connectivity anchor access apparatus provided by this embodiment is configured to implement the dual-connectivity anchor access method of the embodiment shown in FIG. 3. The implementation principle and technical effects of the dual-connectivity anchor access apparatus provided by this embodiment are similar to those of the dual-connectivity anchor access method, and details will not be repeated herein.

FIG. 13 is a structural schematic diagram of a UE according to an embodiment. As shown in FIG. 13, the UE includes a processor 131, a memory 132, a transmitter 133 and a receiver 134. The number of the processor 131 in the UE may be one or more, and one processor 131 is used as an example in FIG. 13. The processor 131, the memory 131, the transmitter 132 and the receiver 134 in the UE may be connected via a bus or in other manners, and in FIG. 13. The connection via the bus is used as an example.

As a computer-readable storage medium, the storage apparatus 132 may be configured to store software programs, computer-executable programs and modules, such as program instructions/modules (for example, the receiving module 111, the selection module 112 and the receiving module 113 in the dual-connectivity anchor access apparatus) corresponding to the dual-connectivity anchor access method in the embodiments of FIGS. 1 and 2 of the present application. The processor 131 executes the software programs, instructions and modules stored in the memory 132 to execute at least one function application and data processing of the UE, that is, to perform the dual-connectivity anchor access method described above.

The memory 132 may include a program storage region and a data storage region. The program storage region may store an operating system and an application program required by at least one function, and the data storage region may store the data created according to the use of the UE. In addition, the memory 132 may include a high-speed random-access memory, and may also include a non-volatile memory such as at least one disk memory, flash memory or other non-volatile solid-state memories.

The transmitter 133 is a combination of modules or devices capable of transmitting radio frequency signals into space and includes, for example, a combination of a radio frequency transmitter, an antenna and another device. The receiver 134 is a combination of modules or devices capable of receiving radio frequency signals from space and includes, for example, a combination of a radio frequency receiver, an antenna and another device.

FIG. 14 is a structural schematic diagram of an access point according to an embodiment. As shown in FIG. 14, the access point includes a processor 141, a memory 142, a transmitter 143 and a receiver 144. The number of the processor 141 in the access point may be one or more. One processor 141 is used as an example in FIG. 14. The processor 141, the memory 142, the transmitter 143 and the receiver 144 in the access point may be connected via a bus or in other manners. In FIG. 14, the connection via the bus is used as an example.

As a computer-readable storage medium, the storage apparatus 142 may be configured to store software programs, computer-executable programs and modules, such as program instructions/modules (for example, the broadcasting module 121, the receiving module 122 and the sending module 123 in the dual-connectivity anchor access apparatus) corresponding to the dual-connectivity anchor access method in the embodiments of FIGS. 3 and 4 of the present application. The processor 141 executes the software programs, instructions and modules stored in the memory 142 to execute at least one function application and data processing of the access point, that is, to perform the dual-connectivity anchor access method described above.

The memory 142 may include a program storage region and a data storage region. The program storage region may store an operating system and an application program required by at least one function, and the data storage region may store the data created according to the use of the access point. In addition, the memory 142 may include a high-speed random-access memory, and may also include a non-volatile memory such as at least one disk memory, flash memory or other non-volatile solid-state memories.

The transmitter 143 is a combination of modules or devices capable of transmitting radio frequency signals into space and includes, for example, a combination of a radio frequency transmitter, an antenna and another device. The receiver 144 is a combination of modules or devices capable of receiving radio frequency signals from space and includes, for example, a combination of a radio frequency receiver, an antenna and another device.

The embodiments of the present application further provide a storage medium including a computer-executable instruction. The computer-executable instruction, when executed by a processor, is used for performing a dual-connectivity anchor access method. The method includes the following steps: a dual-connectivity anchor frequency indication is received; one frequency indicated by the dual-connectivity anchor frequency indication is selected as an access frequency; and a network is accessed at the selected access frequency.

The embodiments of the present application further provide a storage medium including a computer-executable instruction. The computer-executable instruction, when executed by a processor, is used for performing a dual-connectivity anchor access method. The method includes the following steps: a dual-connectivity anchor frequency indication is broadcasted; an access request is received from a UE at one frequency indicated by the dual-connectivity anchor frequency indication; and an access response is sent to the UE so that the UE accesses a network.

The preceding is only example embodiments of the present application and are not intended to limit the scope of the present application.

The term user terminal encompasses any appropriate type of radio user device, such as a mobile phone, a portable data processing apparatus, a portable web browser or a vehicle-mounted mobile station.

Various embodiments of the present application may be implemented in hardware or special-purpose circuits, software, logic or any combination thereof. For example, some aspects may be implemented in hardware while other aspects may be implemented in firmware or software that may be executed by a controller, a microprocessor, or other computing apparatuses.

The embodiments of the present application may be implemented by computer program instructions executed by a data processor of a mobile apparatus, for example, in a processor entity, by hardware, or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules, and functions, or may represent a combination of program steps with logic circuits, modules, and functions. Computer programs may be stored in a memory. The memory may be of any type suitable to the local technical environment and may be implemented using any suitable data storage technology such as, but not limited to, a read-only memory (ROM), a random-access memory (RAM), an optical memory device and system (a digital video disc (DVD) or a compact disc (CD)), and the like. Computer-readable media may include non-transitory storage media. The data processor may be of any type suitable to the local technical environment, such as a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A dual-connectivity anchor access method, comprising:
receiving a dual-connectivity anchor frequency indication;
selecting one frequency indicated by the dual-connectivity anchor frequency indication as an access frequency; and
accessing a network at the selected access frequency.

2. The method of claim 1, further comprising:
receiving a standalone, SA/a non-standalone, NSA, priority indication; and
selecting a networking mode of a user equipment, UE, according to a networking capability of the UE and the SA/NSA priority indication;
wherein accessing the network at the selected access frequency comprises: accessing the network through the selected networking mode at the selected access frequency.

3. The method of claim 2, wherein selecting the networking mode of the UE according to the networking capability of the UE and the SA/NSA priority indication comprises:
in a case where the UE only supports SA, networking, by the UE, according to a SA mode;
in a case where the UE only supports NSA, networking, by the UE, according to an NSA mode; and
in a case where the UE supports both SA and NSA, selecting, by the UE, a preferred mode to network according to the SA/NSA priority indication.

4. The method of any one of claims 1 to 3, wherein
receiving the dual-connectivity anchor frequency indication comprises: receiving a public land mobile network, PLMN, -level dual-connectivity anchor frequency indication, wherein the PLMN-level dual-connectivity anchor frequency indication comprises dual-connectivity anchor frequency indications of different PLMNs; and
selecting one frequency indicated by the dual-connectivity anchor frequency indication as the access frequency comprises: selecting an access frequency according to a dual-connectivity anchor frequency indication of a home PLMN.

5. The method of any one of claims 1 to 3, wherein selecting one frequency indicated by the dual-connectivity anchor frequency indication as the access frequency comprises:
selecting one frequency with a highest priority indicated by the dual-connectivity anchor frequency indication as the access frequency.

6. The method of any one of claims 1 to 3, wherein selecting one frequency indicated by the dual-connectivity anchor frequency indication as the access frequency comprises:
in a case where the UE supports dual connectivity, selecting one frequency indicated by the dual-connectivity anchor frequency indication as the access frequency.

7. The method of any one of claims 1 to 3, after receiving the dual-connectivity anchor frequency indication, further comprising:
in a case where the UE does not support dual connectivity, ignoring the dual-connectivity anchor frequency indication.

8. A dual-connectivity anchor access method, comprising:
broadcasting a dual-connectivity anchor frequency indication;
receiving an access request from a user equipment, UE, at one frequency of the dual-connectivity anchor frequency indication; and
sending an access response to the UE so that the UE accesses a network.

9. The method of claim 8, further comprising: broadcasting a standalone, SA/NSA, priority indication;
wherein receiving the access request from the UE at one frequency indicated by the dual-connectivity anchor frequency indication comprises: receiving the access request from the UE at the one frequency indicated by the dual-connectivity anchor frequency indication, wherein the access request comprises a networking mode of the UE selected by the UE according to a networking capability of the UE and the SA/NSA priority indication; and
wherein sending the access response to the UE so that the UE accesses the network comprises: sending the access response to the UE at the one frequency so that the UE accesses the network through the selected networking mode.

10. The method of claim 8 or 9, wherein
broadcasting the dual-connectivity anchor frequency indication comprises: broadcasting a public land mobile network, PLMN, -level dual-connectivity anchor frequency indication, wherein the PLMN-level dual-connectivity anchor frequency indication comprises dual-connectivity anchor frequency indications of different PLMNs; and
receiving the access request from the UE at the one frequency indicated by the dual-connectivity anchor frequency indication comprises: receiving an access request from an access frequency selected by the UE according to a dual-connectivity anchor frequency indication of a home PLMN.

11. The method of claim 10, wherein broadcasting the dual-connectivity anchor frequency indication comprises:
in a scenario where a network shares a plurality of PLMNs, broadcasting a plurality of dual-connectivity anchor frequency indications and priorities of the plurality of dual-connectivity anchor frequency indications; and
in a non-network sharing scenario, broadcasting a plurality of dual-connectivity anchor frequency indications and priorities of the plurality of dual-connectivity anchor frequency indications.

12. The method of claim 8 or 9, wherein broadcasting the dual-connectivity anchor frequency indication comprises:
broadcasting the dual-connectivity anchor frequency indication at all frequency layers.

13. The method of claim 9, wherein broadcasting the SA/the NSA priority indication comprises:
broadcasting the SA/ NSA priority indication at all frequency layers.

14. A dual-connectivity anchor access apparatus, comprising:
a receiving module, which is configured to receive a dual-connectivity anchor frequency indication;
a selection module, which is configured to select one frequency indicated by the dual-connectivity anchor frequency indication as an access frequency; and
an access module, which is configured to access a network at the selected access frequency.

15. A dual-connectivity anchor access apparatus, comprising:
a broadcasting module, which is configured to broadcast a dual-connectivity anchor frequency indication;
a receiving module, which is configured to receive an access request from a user equipment, UE, at one frequency indicated by the dual-connectivity anchor frequency indication; and
a sending module, which is configured to send an access response to the UE so that the UE accesses a network.

16. A user equipment, UE, comprising a processor and a memory, wherein the processor is configured to execute program instructions stored in the memory to perform the dual-connectivity anchor access method according to any one of claims 1 to 7.

17. An access point, comprising a processor and a memory, wherein the processor is configured to execute program instructions stored in the memory to perform the dual-connectivity anchor access method according to any one of claims 8 to 13.

18. A computer-readable storage medium storing a computer program, wherein the computer program, when executed by a processor, performs the dual-connectivity anchor access method according to any one of claims 1 to 13.
